Europäisches Patentamt

European Patent Office

Office européen des brevets

(19)

(11) EP 0 873 257 B1

(12) **EUROPÄISCHE PATENTSCHRIFT**

(45) Veröffentlichungstag und Bekanntmachung des Hinweises auf die Patenterteilung:
**26.04.2000 Patentblatt 2000/17**

(21) Anmeldenummer: **97901022.0**

(22) Anmeldetag: **14.01.1997**

(51) Int Cl.[7]: **B60T 8/00**

(86) Internationale Anmeldenummer:
**PCT/EP97/00143**

(87) Internationale Veröffentlichungsnummer:
**WO 97/26165 (24.07.1997 Gazette 1997/32)**

(54) **VERFAHREN ZUR ERHÖHUNG DES GIERMOMENTES EINES FAHRZEUGS**

METHOD FOR THE INCREASE OF YAWING MOMENT OF A VEHICLE

PROCEDE POUR ACCROITRE LE COUPLE D'EMBARDEE D'UN VEHICULE

(84) Benannte Vertragsstaaten:
**DE FI GB NL**

(30) Priorität: **19.01.1996 DE 19601795**

(43) Veröffentlichungstag der Anmeldung:
**28.10.1998 Patentblatt 1998/44**

(73) Patentinhaber: **Continental Teves AG & Co. oHG**
**60488 Frankfurt (DE)**

(72) Erfinder: **OEHLGRIEN, Ralf**
**D-55130 Mainz (DE)**

(56) Entgegenhaltungen:
**DE-A- 4 018 495**      **DE-A- 4 109 926**
**DE-A- 19 503 148**      **DE-A- 19 619 476**
**DE-C- 4 123 235**      **DE-C- 4 401 995**

## Beschreibung

Die vorliegende Erfindung betrifft ein Verfahren zur Erhöhung des Giermomentes eines Fahrzeugs gemäß dem Oberbegriff des Anspruchs 1. Ein derartiges Verfahren ist aus der DE 41 23 235 C1 bekannt. Nach dem bekannten Verfahren wird bei einem untersteuernden Fahrverhalten (das Fahrzeug ist gierunwillig, d.h. es folgt nicht dem durch den Fahrzeugführer vorgegebenen Lenkeinschlag) das kurveninnere Hinterrad gebremst. Der Abbau der Seitenführungkraft des Rades und der Aufbau der Bremskraft in Umfangsrichtung bewirken ein eindrehendes Giermoment. Es wird vorgeschlagen, ggf. auch das kurvenäußere Hinterrad zusätzlich zu bremsen. Am kurvenäußeren Hinterrad behindert zwar die Bremskraft in Umfangsrichtung den Eindrehvorgang in der Kurve, der Abbau der Seitenführungskraft des kurvenäußeren Rades soll aber den gegenwirkenden Effekt nicht nur ausgleichen, sondern - wegen der Hebelarme der angreifenden Kräfte - sogar überkompensieren und das Fahrzeug somit zusätzlich in die Kurve führen.

Dies ist aber nur dann zweckmäßig, wenn das Produkt aus Seitenkraftverlust und zugehörigem Hebelarm zum Schwerpunkt des Fahrzeugs größer ist als das Produkt aus Bremskraft in Umfangsrichtung und dem zugehörigen Hebelarm zum Schwerpunkt. In allen anderen Fällen also bleibt die Erhöhung des Giermomentes auf einen Bremseingriff am kurveninneren Hinterrad begrenzt.

Insbesondere bei frontangetriebenen Mittelklassefahrzeugen, welche konstruktiv bedingt eine stark untersteuernde Tendenz aufweisen, stellt sich für den Anwendungsfall eines solchen Verfahrens aber folgendes Problem: Bei schnell durchfahrenen Kurven, vornehmlich auf Hochreibwert, verliert das kurveninnere Hinterrad den kraftschlüssigen Kontakt zur Fahrbahn, d.h. es hebt ab und ist so stark entlastet, daß es weder Längsnoch Seitenführungskräfte übertragen kann. Neigt das Fahrzeug in dieser Fahrsituation zum starken Untersteuern und somit zum Verlust seiner Lenkfähigkeit, so würde das oben beschriebene Verfahren bei der Erfüllung der Eintrittskriterien versuchen, über das kurveninnere Hinterrad ein unterstützendes Giermoment zu erzeugen. Es wird also ein nach dem erforderlichen Zusatzmoment berechneter Bremsdruck in die Radbremse des kurveninneren Hinterrades eingespeist. Aufgrund der starken Entlastung dieses Rades allerdings kann das kurveninnere Hinterrad in der geschilderten Situation erfahrungsgemäß nur maximal 15 bis 25 % des theoretisch erforderlichen Bremsdruckes umsetzen. Das heißt, daß z. B. Bei einem errechneten Sollbremsdruck von 70 bar nur etwa 15 bar bis zur maximalen Längskraftausnutzung umgesetzt werden, während bei einer vollen Einsteuerung des berechneten Bremsdruckes das Rad in einen Schlupf von über 50 % gerät, blockiert und somit überhaupt keine Kräfte mehr übertragen kann.

In der DE 41 09 926 A1 wird daher ein anderer Ansatz verfolgt. Bei einer Kurvenfahrt werden bei einem auftretenden, für das gesamte Fahrzeug ermittelten Schräglaufwinkel (Anmerkung: gemeint ist wohl der Schwimmwinkel) grundsätzlich die beiden kurveninneren Räder stärker gebremst als die kurvenäußeren. Dabei wird an der Vorderachse und an der Hinterachse jeweils abhängig vom eingestellten Lenkwinkel und vom ermittelten Schräglaufwinkel dieselbe berechnete Bremsdruckdifferenz eingestellt. Das entspricht einer Bremsdruckverteilung des zur Erhöhung des Giermomentes aufgebrachten Bremsdruckes zu konstant jeweils 50 % auf das kurveninnere Hinterrad und das kurveninnere Vorderrad.

Diese starre Aufteilung hat den Nachteil, daß die Druckbeaufschlagung des kurveninneren Vorderrades unabhängig von der Fähigkeit des kurveninneren Hinterrades zur Übertragung eines eventuell ausreichenden Bremsmoments erfolgt. Bei Fahrmanövern mit nur geringen Wankbewegungen der Fahrzeugkarosserie und somit geringen Gewichtsverlagerungen würde sich in einem solchen Fall die Regelgüte beim Untersteuern eher verschlechtern, da nicht in jeder Untersteuerungssituation erwünscht ist, einen bereits vorhandenen Seitenführungskraftverlust durch Aufbau eines zusätzlichen Bremsmomentes weiter zu vergrößern. Das wäre aber der Fall, wenn das Fahrzeug bereits sozusagen über die Vorderachse schiebt und die Seitenführungskraft an der Vorderachse zusätzlich zwangsläufig durch einen Bremseneingriff reduziert würde.

Die vorliegende Erfindung stellt daher ein Verfahren der eingangs genannten Art vor, bei welchem abhängig vom Radschlupf des kurveninneren Hinterrades nur in bestimmten Situationen eine variable Bremsbetätigung am kurveninneren Vorderrad vorgesehen ist. Das Prinzip der vorliegenden Erfindung besteht also darin, daß der Regelungseingriff an der Vorderachse lediglich eine Notfallfunktion für solche Situationen erfüllt, bei welchen das kurveninnere Hinterrad aufgrund seines vorhandenen Radschlupfes das erforderliche Bremsmoment zur Kompensation der Untersteuerungstendenz nicht mehr übertragen kann und somit das Fahrzeug seine Lenkfähigkeit verliert. Die vorliegende Erfindung nimmt also eine schlupfabhängige, radindividuelle Bremsmomentenverteilung zwischen dem kurveninneren Hinterrad und dem kurveninneren Vorderrad vor.

Vorteilhafte Weiterbildungen der Erfindung finden sich in den Unteransprüchen, wobei nun anhand von zwei Figuren eine nähere Erläuterung des Erfindungsgedankens erfolgt.

Es zeigt:

Fig. 1    ein Diagramm, welches abhängig vom Radschlupf die übertragbare Bremskraft, Radumfangskraft und Seitenkraft darstellt,

Fig. 2 eine vektorielle Darstellung der von einem rechten Vorderrad beim Durchfahren einer Rechtskurve übertragbaren Kräfte anhand des Kammschen Kreises.

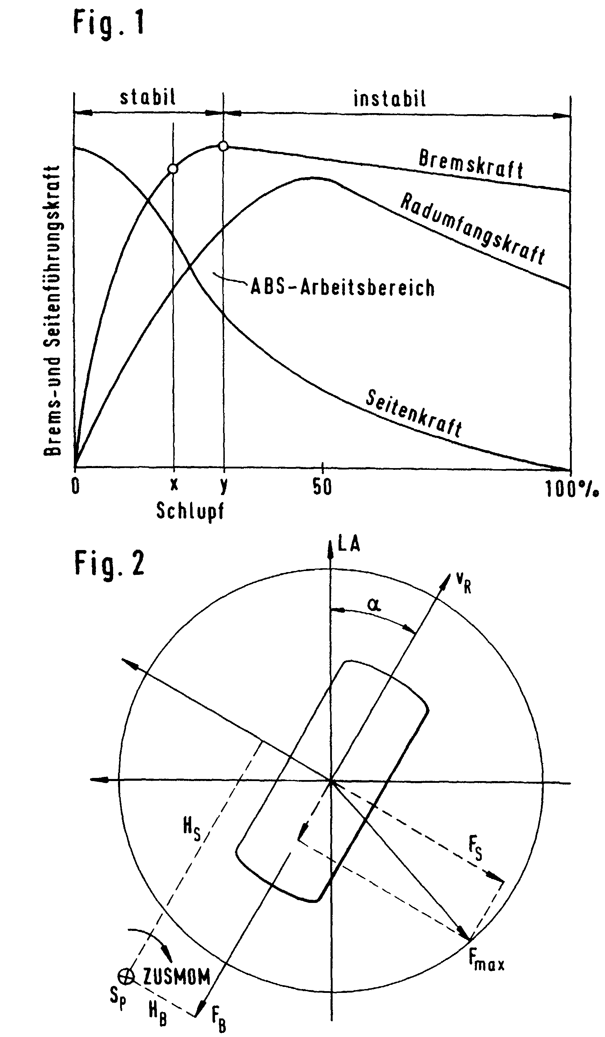

In Fig. 1 ist der Schlupf eines Rades von 0 - 100 % aufgetragen. Bis etwa 20 % Radschlupf an der Stelle x befindet sich das Rad in einem stabilen Bereich, auch wenn kein Regelungseingriff durch ein Schlupfregelsystem unternommen wird, da es ausreichend Haftung zur Fahrbahn aufweist. Bei weiterer Erhöhung der Schlupfes bis zur Stelle y kann das Rad stabilisiert werden, indem ein Schlupfregelsystem bzw. Antiblockiersystem bei Blockiertendenz eingreift. Bei weiterer Erhöhung des Radschlupfes befindet sich das Rad in einem instabilen Bereich, d.h., daß seine Haftungsgrenze überschritten ist und keine ausreichenden Kräfte, vor allem zur Fahrzeugstabilisierung notwendige Seitenführungskräfte, mehr übertragen werden können.

Für die Erfindung bedeutet das, daß zum Regeleingriff bei einer Untersteuerungstendenz das berechnete Zusatzgiermoment zunächst komplett als Bremsdruck an das kurveninnere Hinterrad weitergegeben wird. Stellt sich nun der bereits geschilderte Fall ein, daß sich das Hinterrad trotz lediglich minimaler Druckumsetzung bereits in Richtung seiner Haftungsgrenze bewegt, d.h. daß sich der Radschlupf bereits jenseits der Stelle x (ca 20%) befindet, so soll zumindest ein Teil des verbleibenden aufzubringenden Zusatzmomentes, welches bisher noch nicht umgesetzt werden konnte, auf das kurveninnere Vorderrad umgeleitet werden.

Um die Lenkfähigkeit in diesem Falle, wenn die maximal übertragbare Seitenführungskraft an der Vorderachse schon ausgenutzt wird, nicht wesentlich weiter zu verringern, soll das kurveninnere Vorderrad lediglich maximal bis zu dem bei der Blockierschutzregelung üblichen Radschlupf von ca. 15 - 30 % geregelt werden, also im wesentlichen innerhalb des Bereiches zwischen den Stellen x und y. Bekannte Verfahren zur Erhöhung des Giermomentes führen das kurveninnere Vorderrad hingegen bis zu einem Radschlupf von 50%. Dies soll hier für die Vorderachse ausdrücklich vermieden werden, um die Seitenführungskraft nicht zu stark zu reduzieren. Am kurveninneren Hinterrad kann allerdings bis zur maximalen Schlupf grenze von 50% Bremsdruck eingesteuert werden, um das Potential dieses Rades zum Aufbau eines Zusatzgiermomentes voll auszuschöpfen.

In Fig. 2 ist der Kammsche Kreis dargestellt, dessen Radius den Betrag der von einem Fahrzeugrad maximal übertragbaren Kraft entspricht. Das abgebildete Fahrzeugrad ist das kurveninnere Vorderrad eines Fahrzeuges beim Durchfahren einer Rechtskurve, wobei der Lenkwinkel $\alpha$ eingestellt ist. Das Rad überträgt eine Seitenkraft $F_S$, welche das Fahrzeug quasi als Zentripetalkraft auf seiner Kurve hält. Zusätzlich überträgt das Rad eine Bremskraft $F_B$, welche senkrecht zur Seitenkraft $F_S$ wirkt. Die aus Vektoraddition resultierende, vom Rad übertragene Kraft hat hier ihren maximal möglichen Wert $F_{max}$, d.h. der Kraftvektor von $F_{max}$ endet auf dem Kammschen Kreis.

Gemäß Fig. 2 zeigt der Vektor der Radgeschwindigkeit $v_R$ mit seiner Verlängerung, welche kollinear zur Bremskraft $F_B$ verläuft, an der kurveninneren Seite des Schwerpunktes $S_P$ vorbei. Das bedeutet, daß bei einer Abbremsung des dargestellten Rades ein Zusatzmoment ZUSMOM im Uhrzeigersinn auf das Fahrzeug ausgeübt wird. Sollte der Lenkwinkel $\alpha$ allerdings größer sein, so daß die Verlängerung des Vektors $F_B$ auf der kurvenäußeren Seite von $S_P$ vorbeizeigt, so wirkt sich eine Bremsung des dargestellten Rades derart aus, daß die Untersteuerungstendenz unterstützt würde.

Aus Fig. 2 ist weiterhin ersichtlich, daß bei einer Erhöhung der Bremskraft $F_B$ zwangsläufig die übertragbare Seitenkraft $F_S$ abnimmt, da die resultierende Gesamtkraft die Größe von $F_{max}$ nicht übersteigen kann. Bis zu einer Kräftegleichheit von $F_B$ und $F_S$ kann $F_B$ um einen größeren Betrag zunehmen, als sich daraufhin $F_S$ reduziert. Ist $F_B$ aber größer als $F_S$, so kehrt sich das Verhältnis in sein Gegenteil um. Der Vektor $F_{max}$ bewegt sich dann etwa in der Richtung der Fahrzeuglängsachse LA, so daß die Bremskraft $F_B$ nur noch um ein geringes Maß zunehmen kann, was aber eine starke Abnahme der übertragbaren Seitenkraft $F_S$ bedingt. Dabei ist noch zu berücksichtigen, daß der Hebelarm $H_S$ von $F_S$ wesentlich länger ist als der Hebelarm $H_B$ von $F_B$.

Es ergeben sich also für die Aufbringung einer Bremskraft zur Erhöhung des Giermomentes am kurveninneren Vorderrad zwei Bedingungen:

Zum einen soll sich der Radschlupf des Vorderrades nur bis zu einer Grenze von ca. 30% bewegen.

Zum anderen muß der Lenkwinkel $\alpha$ kleiner sein als etwa 30°, wobei diese Größe fahrzeugabhängig ist, da sonst der Kraftvektor der Bremskraft $F_B$ auf der kurvenäußeren Seite des Fahrzeugschwerpunktes $S_P$ vorbeizeigt und somit die ohnehin zu geringe Gierwinkelgeschwindigkeit des Fahrzeugs noch weiter verringert. Somit muß als Druckabbaukriterium an der Vorderachse neben der Beachtung der Schlupfgrenze von höchstens 30 % ein zu großer Lenkwinkel eingeführt werden: Es ist zu beachten, daß das durch den Bremseneingriff am kurveninneren Vorderrad erzeugte zusätzliche Giermoment infolge der aufgebrachten Bremskraft multipliziert mit der Länge des Hebelarms zum Schwerpunkt $S_P$ nicht wesentlich kleiner wird als das durch die Reduzierung der Seitenkraft $F_S$ entstehende, sich negativ auswirkende Giermoment. Eine genaue Festlegung hierzu muß in der Praxis ermittelt werden, da der Hauptanteil der Seitenführungskraft durch das kurvenäußere, also belastete Rad, aufgebracht wird. Es ist also möglich, daß diese Bedingung in der Realität ohne Bedeutung ist, wenn das kurveninnere Vorderrad sowieso nur bis in den zur Blockierschutzregelung üblichen Schlupf geregelt wird.

Eine Schlupfberechnung am kurveninneren Hinterrad kann dabei auf einfache Weise nach folgender Gleichung erfolgen:

$$\lambda_{Brems} = \frac{V_{Ref} - V_{Rad}}{V_{Ref}} * 100\%$$

mit

$\lambda_{Brems} =$    Bremsschlupf am kurveninneren Hinterrad in Prozent

$V_{Ref} =$    Aus Einzelraddrehzahlen ermittelte Fahrgeschwindigkeit des Fahrzeugs

$V_{Rad} =$    Radgeschwindigkeit des kurveninneren Hinterrades

Analog erfolgt die Schlupfberechnung am kurveninneren Vorderrad. Befindet sich das kurveninnere Hinterrad in einem Bremsschlupf, welcher kleiner als 20 % ist, so wird nur an diesem kurveninneren Hinterrad das angeforderte Zusatzgiermoment in Form von Bremsdruck umgesetzt. Erst bei Überschreiten eines Bremsschlupfes von 20 %, der Eintrittsschwelle für die schlupfabhängige Verteilung der Bremsmomente, wird das kurveninnere Vorderrad zur Umsetzung des berechneten, weiterhin aufzubringenden Zusatzgiermomentes ZusMom$_{Rest}$ herangezogen nach folgender Gleichung:

$$ZusMom_{Rest} = ZusMom_{Ges} - ZusMom_{HR}$$

mit

$ZusMom_{Ges} =$    Vom elektronischen Regler berechnetes Zusatzgiermoment welches zur Anpassung einer vorhandenen Ist-Gierwinkelgeschwindigkeit an eine Soll-Gierwinkelgeschwindigkeit benötigt wird,

$ZusMom_{HR} =$    Vom Hinterrad bereits umgesetztes Zusatzmoment,

$ZusMom_{Rest} =$    Restliches Zusatzmoment, welches vom Hinterrad nicht umgesetzt werden konnte, nur bis zu einem Vorderradschlupf von ca. 30% umzusetzen und nur, wenn der Lenkwinkel nicht zu groß ist.

Gleichzeitig kann am kurveninneren Hinterrad eine weitere Bremsschlupferhöhung bis zu einer Schlupfgrenze von 50% erfolgen.

**Patentansprüche**

**1.** verfahren zur Erhöhung des Giermomentes eines Fahrzeugs, welches beim Durchfahren einer Kurve ein untersteuerndes Verhalten aufweist, wobei zumindest eine Bremsbetätigung am kurveninneren Hinterrad erfolgt, dadurch **gekennzeichnet,** daß nur in bestimmten Situationen, bei welchen das Kurveninnere Hinterrad aufgrund seines vorhandenen Radschlupfes das erforderliche Bremsmoment zur Kompensation der Untersteuertendenz nicht mehr übertragen kann, eine variable Bremsbetätigung am kurveninneren Vorderrad vorgesehen ist.

**2.** Verfahren nach Anspruch 1, dadurch **gekennzeichnet,** daß die Radbremse des kurveninneren Vorderrades nur dann zur Erhöhung des Giermomentes betätigt wird, wenn der Radschlupf des kurveninneren Hinterrades über 15 % liegt.

**3.** Verfahren nach Anspruch 1 oder 2, dadurch **gekennzeichnet,** daß die Radbremse des kurveninneren Vorderrades zur Erhöhung des Giermomentes nur dann betätigt wird, wenn der Lenkwinkel ($\alpha$) so klein ist, daß die Verlängerung des Kraftvektors der Bremskraft ($F_B$) des kurveninneren Vorderrades auf der kurveninneren Seite am Fahrzeugschwerpunkt ($S_P$) vorbeizeigt.

**4.** Verfahren nach einem der vorhergehenden Ansprüche, dadurch **gekennzeichnet,** daß die Bremsbetätigung des kurveninneren Vorderrades nur bis zu einer Schlupfgrenze durchgeführt wird, die unter 40 % liegt.

**5.** Verfahren nach einem der vorhergehenden Ansprüche, dadurch **gekennzeichnet,** daß die Bremsbetätigung des kurveninneren Vorderrades nur erfolgt, wenn das durch Bremsung des kurveninneren Vorderrades auf den Fahrzeugschwerpunkt (SP) ausgeübte zusätzliche Giermoment (ZUSMOM) um die Fahrzeughochachse nicht wesentlich kleiner ist als das durch Verlust der Seitenführungskraft ($F_S$) entstandene Giermoment in Gegenrichtung.

**Claims**

**1.** Method of increasing the yaw torque of a vehicle which exhibits an understeering behavior during cornering, wherein a brake application is effected at least on the bend-inward rear wheel, **characterized** in that a variable brake application on the bend-inward front wheel is effected only in determined situations where the bend-inward rear wheel, due to its existing wheel slip, is no longer able to transmit the necessary brake torque for compensation of the understeering tendency.

**2.** Method as claimed in claim 1, **characterized** in that the wheel brake of the bend-inward front wheel is actuated to increase the yaw torque only if the wheel slip of the bend-inward rear wheel exceeds 15 %.

3. Method as claimed in claim 1 or claim 2, **characterized** in that the wheel brake of the bend-inward front wheel is actuated to increase the yaw torque only if the steering angle ($\alpha$) is so small that the extension of the force vector ($F_B$) of the bend-inward front wheel on the bend-inward side points past the point of gravity of the vehicle (Sp).

4. Method as claimed in any one of the preceding claims, **characterized** in that the brake application on the bend-inward front wheel is effected only until a slip limit which is below 40 %.

5. Method as claimed in any one of the preceding claims, **characterized** in that the brake application on the bend-inward front wheel is effected only if the additional yaw torque (ZUSMOM) about the vertical vehicle axis which is exerted on the point of gravity of the vehicle (Sp) due to braking of the bend-inward front wheel is not considerably smaller than the yaw torque in the opposite direction which is caused by loss in the cornering force ($F_S$).

**Revendications**

1. Procédé pour augmenter le couple d'embardée d'un véhicule ayant un comportement sous-virant en passant un virage, un actionnement de frein étant effectué au moins sur la roue arrière à l'intérieur du virage, **caractérisé en ce qu'**un actionnement de frein variable sur la roue avant à l'intérieur du virage n'est prévu que dans certaines situations dans lesquelles la roue arrière à l'intérieur du virage ne peut plus transmettre le couple de freinage nécessaire pour compenser la tendance au sous-virage à cause de son glissement de roue existant.

2. Procédé selon la revendication 1, **caractérisé en ce que** le frein de roue de la roue avant à l'intérieur du virage est seulement actionné pour augmenter le couple d'embardée lorsque le glissement de roue de la roue arrière à l'intérieur du virage excède 15 %.

3. Procédé selon la revendication 1 ou 2, **caractérisé en ce que** le frein de roue de la roue avant à l'intérieur du virage est seulement actionné pour augmenter le couple d'embardée lorsque l'angle de braquage ($\alpha$) est tellement petit que la prolongation du vecteur de force de la force de freinage ($F_B$) de la roue avant à l'intérieur du virage passe à côté du centre de gravité du véhicule ($S_P$) sur le côté à l'intérieur du virage.

4. Procédé selon l'une des revendications précédentes, **caractérisé en ce que** l'actionnement de frein sur la roue avant à l'intérieur du virage est seulement effectué jusqu'à une limite de glissement qui est inférieure à 40 %.

5. Procédé selon l'une des revendications précédentes, **caractérisé en ce que** l'actionnement de frein sur la roue avant à l'intérieur du virage est seulement effectué lorsque le couple d'embardée supplémentaire (ZUSMOM) exercé, en freinant la roue avant à l'intérieur du virage, sur le centre de gravité du véhicule ($S_P$) autour de l'axe vertical du véhicule n'est pas considérablement inférieur au couple d'embardée en sens inverse formé à cause de la perte de la force de guidage latérale ($F_S$).

EP 0 873 257 B1

## Fig. 1

## Fig. 2